# EUROPEAN PATENT APPLICATION

(11) **EP 3 442 002 A1**
(43) Date of publication of application: **13.02.2019**
(21) Application number: 18187743.2
(22) Date of filing: 07.08.2018
(51) Int. Cl.: H01J 49/00

(54) **OPERATION SEQUENCE EDITING DEVICE, ANALYSIS CONTROL SYSTEM, ANALYSIS SYSTEM AND OPERATION SEQUENCE EDITING METHOD**

(30) Priority: 08.08.2017 JP 2017153687
(71) Applicant: Shimadzu Corporation, Kyoto 604-8511 (JP)
(72) Inventor: HOSOI, Kosuke, Kyoto-shi, Kyoto 604-8511 (JP)
(74) Representative: Mewburn Ellis LLP

(57) **Abstract**

Contents of one or a plurality of setting items included in each of a plurality of steps of an operation sequence are acquired by an acquirer. Screen data for displaying contents of the one or plurality of setting items of the plurality of steps acquired by the acquirer as an operation sequence screen is generated by a generator. The operation sequence screen is displayed in a display unit by a display controller based on the screen data generated by the generator. In the operation sequence screen, the plurality of steps of an analysis device are arranged in a first direction in a chronological order. Further, contents of one or a plurality of setting items of each step are arranged in a second direction that intersects with the first direction.

## Description

### BACKGROUND OF THE INVENTION

### Field of the Invention

The present invention relates to an operation sequence editing device, an analysis control system, an analysis system and an operation sequence editing method for editing an operation sequence of an analysis device.

### Description of Related Art

In an analysis device, each constituent operates in accordance with a preset operation sequence, whereby various analysis of a sample to be measured is performed. For example, JP 2015-185307 A describes an ion trap mass spectrometer using an ion source and a matrix-assisted laser desorption/ionization (MALDI) technique. In this mass spectrometer, a controller controls operations of a laser driver, an ion trap power source, a data processor and the like in accordance with a predetermined operation sequence. Thus, mass spectrometry of the sample is performed.

### BRIEF SUMMARY OF THE INVENTION

In the measurement by the analysis device, it is necessary to change an operation sequence according to a type of a measurement subject. Normally, using an analysis control program for controlling an analysis operation of an analysis device, a user selects a desired operation sequence from a plurality of operation sequences prepared in advance. Meanwhile, an editor program that is used for the user to create and edit an operation sequence has also been developed. In an operation sequence, contents of a plurality of setting items are set for each of the steps that are sequentially performed.

The user can set or change the contents of the plurality of setting items of each step of the operation sequence on a screen of a display unit by using the above-mentioned editor program. The operation sequence of the analysis device can be edited by such a user's operation. In this case, the names of the plurality of steps are displayed in the display unit. When the user selects any one of the plurality of steps, the contents of the plurality of setting items of the selected step are shown. Thus, the user can confirm the contents of each setting item of a desired step. However, the user cannot easily identify the detailed setting contents of the entire operation sequence.

An object of the present invention is to provide an operation sequence editing device, an analysis control system, an analysis system and an operation sequence editing method that enables detailed setting contents of an entire operation sequence of an analysis device to be easily identified.
(1) An operation sequence editing device according to one aspect of the present invention for editing an operation sequence of an analysis device with use of a display unit includes an acquirer that acquires contents of one or a plurality of setting items included in each of a plurality of steps of the operation sequence, a generator that generates screen data for displaying the acquired contents of the one or plurality of setting items of the plurality of steps as an operation sequence screen, and a display controller that displays the operation sequence screen in the display unit based on the generated screen data, wherein the operation sequence screen includes a time axis extending in a first direction, and is arranged such that the plurality of steps are arranged in the first direction in a chronological order, and is arranged such that contents of one or a plurality of setting items of each step are arranged in a second direction that intersects with the first direction.

In this operation sequence editing device, the operation sequence screen is displayed in the display unit based on generated screen data. In the operation sequence screen, the plurality of steps of the analysis device are arranged in the first direction in a chronological order. Further, the contents of the one or plurality of setting items of each step are arranged in the second direction that intersects with the first direction. In this configuration, the user can easily identify the chronological order of the plurality of steps and the contents of the setting items of each step by viewing the operation sequence screen. Thus, the detailed setting contents of the entire operation sequence of the analysis device can be easily identified.
(2) The operation sequence screen may include a plurality of step display areas in which a plurality of step identification information pieces for identifying the plurality of steps are displayed, a plurality of item display areas in which a plurality of item identification information pieces for identifying a plurality of setting items are displayed, and a plurality of contents display areas in which contents of the plurality of setting items are displayed, and the plurality of step display areas may be arranged along the time axis, the plurality of item display areas may be arranged in the second direction, the plurality of contents display areas may be arranged in the second direction for each step, and the step display area and one or a plurality of contents display areas corresponding to each step may constitute a step display column.

In this case, each step and each setting item can be easily identified. Further, the contents of each setting item, and the correspondence relationship between the steps and the setting items can be easily identified. Further, the user can easily identify the contents of the setting items of each step by viewing each step display column.
(3) The operation sequence editing device may further include a display mode switcher that selectively switches the display controller between a first display mode and a second display mode, wherein the display controller may allow the operation sequence screen to be displayed in the first display mode such that each of a plurality of step display rows has a length corresponding to an actual time length required for each step in the first direction, and may allow the operation sequence screen to be displayed in the second display mode such that the plurality of step display rows have similar lengths in the first direction.

In this case, the user can easily identify the processing time length of each step by switching the display mode of the display controller to the first display mode. Further, the user can easily identify the chronological order of the plurality of steps by switching the display mode of the display controller to the second display mode.
(4) The operation sequence editing device may further include a contents mover that moves contents of a contents display area that is selected in the operation sequence screen to another contents display area based on an operation by a user, wherein the generator may update the screen data based on the movement of the contents by the contents mover. In this case, the user can easily set or change the contents of the desired setting item. Thus, the operation sequence can be easily edited.
(5) The operation sequence editing device may further include a column mover that moves a step display column selected in the operation sequence screen in a direction of the time axis based on an operation by a user, wherein the generator may update the screen data based on the movement of the step display column by the column mover. In this case, the user can easily change the chronological order of the steps. Thus, the operation sequence can be easily edited.
(6) The display controller may allow the display unit to display a detailed information setting region for setting one or a plurality of contents in a contents display area selected in the operation sequence screen, and the operation sequence editing device may further include an accepter that accepts the setting of the one or plurality of contents in the detailed information setting region, and the generator may update the screen data based on the one or plurality of contents accepted by the accepter. In this case, the user can set the contents of the setting item corresponding to the desired contents display area easily and in detail. Thus, the operation sequence can be easily edited.
(7) The operation sequence editing device may further include a creator that creates an analysis control file for controlling the analysis device based on the screen data. In this case, the analysis device can be operated in accordance with the edited operation sequence based on the created analysis control file.
(8) An analysis control system according to another aspect of the present invention that controls an operation of an analysis device includes the operation sequence editing device according to the one aspect of the present invention, a display unit that displays an operation sequence screen based on control by the display controller of the operation sequence editing device, and an analysis control device that controls an operation of the analysis device based on an analysis control file created by the creator of the operation sequence editing device.

In this analysis control system, the analysis device can be operated by the analysis control device based on the analysis control file created by the creator of the above-mentioned operation sequence editing device. Further, the operation sequence screen is displayed in the display unit based on the control by the display controller of the operation sequence editing device. The user can easily identify the chronological order of the plurality of steps and the contents of the setting item of each step by viewing the operation sequence screen. Thus, the detailed setting contents of the entire operation sequence of the analysis device can be easily identified.
(9) An analysis system according to yet another aspect of the present invention includes the analysis control system according to the other aspect of the present invention, and an analysis device that acquires analysis data indicating a result of analysis by analyzing a sample based on control by the analysis control device of the analysis control system.

In this analysis system, the analysis device operates based on the control of the analysis control device of the analysis control system. In the operation sequence editing device, the operation sequence screen is displayed in the display unit based on the generated screen data. With this configuration, the user can easily identify the chronological order of the plurality of steps and the contents of the setting item of each step by viewing the operation sequence screen. Thus, the detailed setting contents of the entire operation sequence of the analysis device can be easily identified.
(10) An operation sequence editing method according to yet another aspect of the present invention for editing an operation sequence of an analysis device with use of a display unit includes acquiring contents of one or a plurality of setting items included in each of a plurality of steps of the operation sequence, generating screen data for displaying the acquired contents of the one or plurality of setting items of the plurality of steps as an operation sequence screen, and displaying the operation sequence screen in the display unit based on the generated screen data, wherein the operation sequence screen includes a time axis extending in a first direction, is arranged such that the plurality of steps are arranged in the first direction in a chronological order, and is arranged such that contents of one or a plurality of setting items of each step are arranged in a second direction that intersects with the first direction.

With this operation sequence editing method, the user can easily identify the chronological order of the plurality of steps and the contents of the setting item of each step by viewing the operation sequence screen. Thus, the detailed setting contents of the entire operation sequence of the analysis device can be easily identified.

Other features, elements, characteristics, and advantages of the present invention will become more apparent from the following description of preferred embodiments of the present invention with reference to the attached drawings.

### BRIEF DESCRIPTION OF THE SEVERAL VIEWS OF THE DRAWING

Fig. 1 is a diagram showing a configuration of an analysis system according to one embodiment of the present invention;
Fig. 2 is a block diagram showing a functional configuration of an analysis control system of Fig. 1;
Fig. 3 is a diagram showing a configuration of an analysis device of Fig. 1;
Fig. 4 is a diagram showing one example of an operation sequence screen displayed in a display unit;
Fig. 5 is a diagram showing details of a timeline display region of Fig. 4;
Fig. 6 is a diagram showing details of the timeline display region in a second display mode;
Fig. 7 is a diagram showing one example of editing of an operation sequence;
Fig. 8 is a diagram showing another example of editing of the operation sequence;
Fig. 9 is a flow chart showing algorithm of editing processing executed by an operation sequence editing program; and
Fig. 10 is a flow chart showing the algorism of the editing processing executed by the operation sequence editing program.

### DESCRIPTION OF THE PREFERRED EMBODIMENTS

An operation sequence editing device, an analysis control system and an analysis system that include the operation sequence editing device and an operation sequence editing method will be described below in detail with reference to drawings.

### (1) Configuration of Analysis System

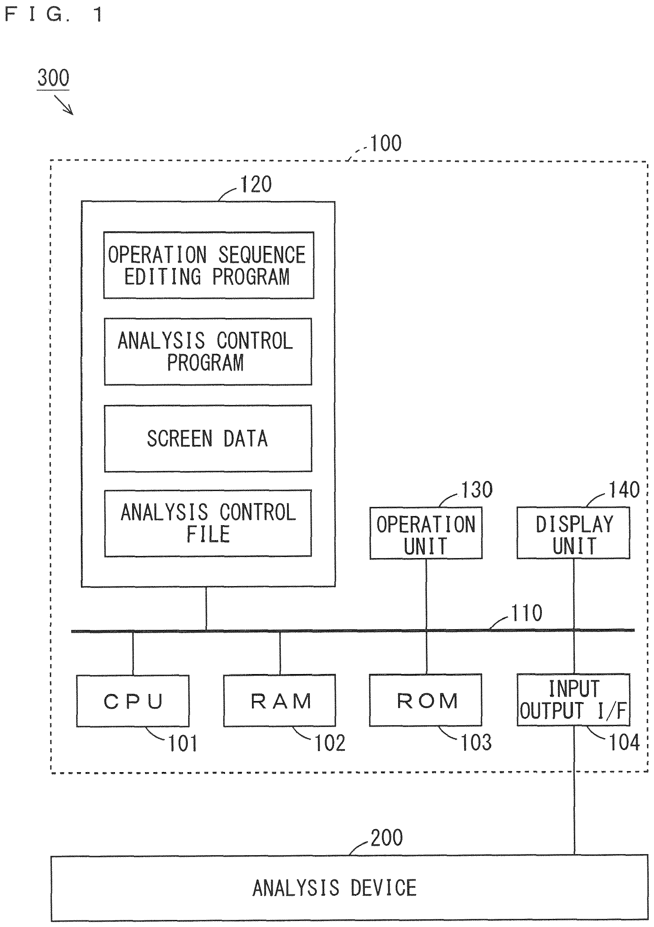

Fig. 1 is a diagram showing a configuration of the analysis system according to one embodiment of the present invention. As shown in Fig. 1, the analysis system 300 includes the analysis control system 100 and an analysis device 200. Fig. 1 mainly shows a configuration of hardware of the analysis control system 100.

The analysis control system 100 is constituted by a CPU (Central Processing Unit) 101, a RAM (Random Access Memory) 102, a ROM (Read Only Memory) 103, an input output interface (I/F) 104, a storage device 120, an operation unit 130 and a display unit 140. The CPU 101, the RAM 102, the ROM 103, the input output interface 104, the storage device 120, the operation unit 130 and the display unit 140 are connected to a bus 110.

The storage device 120 includes a storage medium such as a hard disc or a semiconductor memory and stores an operation sequence editing program, an analysis control program, screen data, an analysis control file and the like. A system program is stored in the ROM 103. The RAM 102 is used as a work area for the CPU 101.

The CPU 101 executes the operation sequence editing program stored in the storage device 120 on the RAM 102, whereby below-mentioned operation sequence editing processing (hereinafter abbreviated as editing processing) is performed. Further, the CPU 101 executes the analysis control program stored in the storage device 120 on the RAM 102, whereby below-mentioned analysis control processing is performed.

The operation unit 130 is an input device such as a keyboard, a mouse or a touch panel. The display unit 140 is a display device such as a liquid crystal display device. A user can give various instructions to the analysis control system 100 using the operation unit 130. A below-mentioned operation sequence screen is displayed in the display unit 140.

The input output interface 104 is connected to the analysis device 200. The analysis device 200 is a liquid chromatograph, a gas chromatograph or a mass spectrometer, for example, and includes various devices. In the present embodiment, the analysis device 200 is a mass spectrometer and controlled in accordance with an operation sequence. Thus, mass spectrometry of a sample to be measured is performed.

### (2) Analysis Control System

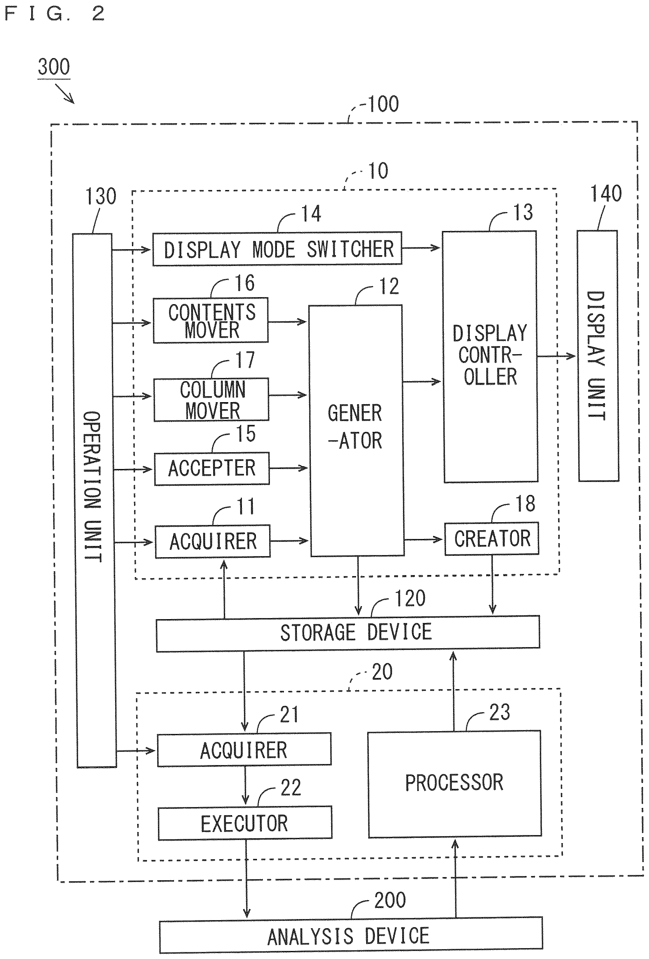

Fig. 2 is a block diagram showing a functional configuration of the analysis control system 100 of Fig. 1. As shown in Fig. 2, the analysis control system 100 includes an operation sequence editing device 10 that performs editing processing of an operation sequence and an analysis control device 20 that performs analysis control processing of the analysis device 200 in accordance with a predetermined operation sequence.

The operation sequence editing device 10 includes an acquirer 11, a generator 12, a display controller 13, a display mode switcher 14, an accepter 15, a contents mover 16, a column mover 17 and a creator 18. The CPU 101 of Fig. 1 executes the operation sequence editing program stored in the storage device 120, whereby functions of the constituent elements (11 to 18) of the operation sequence editing device 10 are implemented. Part or all of the constituent elements (11 to 18) of the operation sequence editing device 10 may be constituted by hardware such as an electronic circuit.

The storage device 120 stores a plurality of analysis control files respectively indicating a plurality of operation sequences according to a plurality of measurement modes and a type of the sample and the like. The plurality of measurement modes correspond to the number of times of a dissociation operation of ions and are different from each other, and include an MS mode, an MS/MS mode and an MS" mode, for example. Each operation sequence indicates a plurality of steps that are sequentially performed and the contents of a plurality of setting items in each step. The contents of the setting item include a parameter value relating to each constituent of the analysis device 200, whether processing is performed (ON and OFF), a time point at which processing is performed and the like.

The acquirer 11 acquires any analysis control file stored in the storage device 120 based on an operation by the user using the operation unit 130. When an external storage medium is connected to the analysis control system 100, the acquirer 11 may acquire an analysis control file stored in the external storage medium. Similarly, when the analysis control system 100 is connected to a network, the acquirer 11 may acquire an analysis control file stored in another storage device via the network.

The generator 12 generates screen data for displaying the operation sequence screen in the display unit 140 based on the analysis control file acquired by the acquirer 11. The operation sequence screen is a screen displaying the contents of the plurality of setting items of the plurality of steps of the analysis device 200. When the operation sequence is edited by the accepter 15, the contents mover 16 or the column mover 17, the generator 12 updates the screen data based on the editing. The screen data generated by the generator 12 and the edited screen data are stored in the storage device 120.

The display controller 13 allows the display unit 140 to display the operation sequence screen based on the screen data generated by the generator 12. The display mode switcher 14 switches a display mode of the display controller 13 between a first display mode and a second display mode based on an operation by the user using the operation unit 130. The operation sequence screen and the display mode of the display controller 13 will be described below.

The user can give an instruction for editing the operation sequence by operating the operation unit 130 on the operation sequence screen displayed in the display unit 140. The editing of the operation sequence includes changing a parameter value in the contents of a desired setting item, changing a time point at which a desired step is performed or the like. The accepter 15, the contents mover 16 or the column mover 17 edits the operation sequence based on the operation by the user using the operation unit 130. Details of the editing of the operation sequence by the accepter 15, the contents mover 16 and the column mover 17 will be described below.

When the operation sequence is edited, the creator 18 creates an analysis control file indicating the edited operation sequence based on the screen data that has been updated by the generator 12, and allows the storage device 120 to store the created analysis control file. The creator 18 may allow an external storage medium or another storage device to store the analysis control file.

The analysis control device 20 includes an acquirer 21, an executor 22 and a processor 23. The CPU 101 of Fig. 1 executes the analysis control program stored in the storage device 120, whereby functions of the constituent elements (21 to 23) of the analysis control device 20 are implemented. Part or all of the constituent elements (21 to 23) of the analysis control device 20 may be constituted by hardware such as an electronic circuit.

The acquirer 21 acquires any analysis control file stored in the storage device 120 based on an operation by the user using the operation unit 130. The acquirer 21 may acquire an analysis control file stored in an external storage medium or another storage device. The analysis control file acquired by the acquirer 21 may be the analysis control file that is created by the creator 18 of the operation sequence editing device 10 or may be the analysis control file that is stored in advance in the storage device 120 or the like.

The executor 22 allows the analysis device 200 to execute mass spectrometry of the sample in accordance with the operation sequence indicated by the analysis control file acquired by the acquirer 21. The processor 23 acquires a digital signal indicating a result of analysis by the analysis device 200 and generates mass spectral data indicating a mass spectrum by processing the acquired digital signal. Further, the processor 23 allows the storage device 120 to store the generated mass spectral data. The processor 23 may allow an external storage medium or another storage device to store the mass spectral data.

### (3) Analysis Device

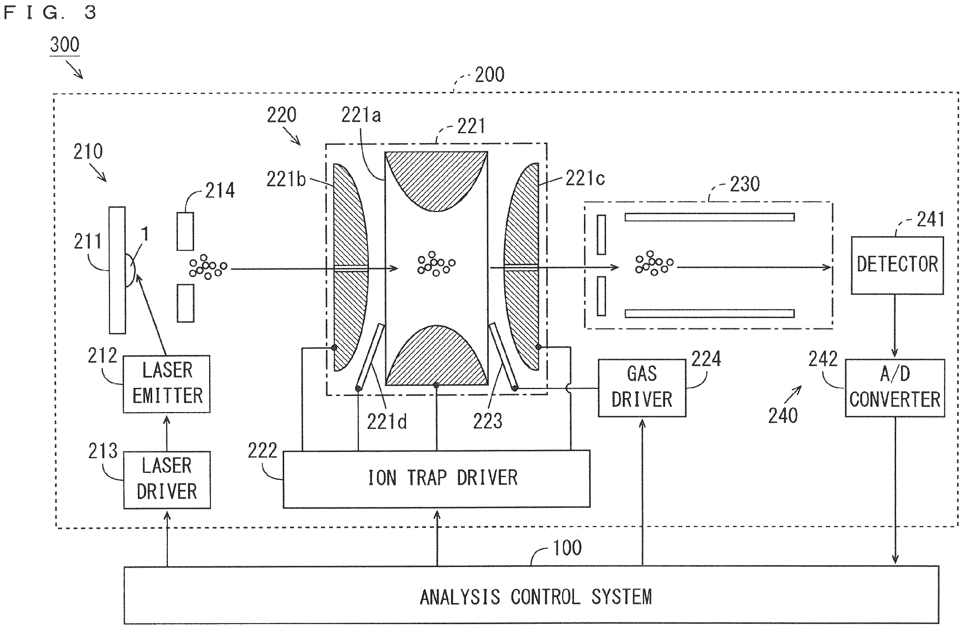

Fig. 3 is a diagram showing a configuration of the analysis device 200 of Fig. 1. The analysis device 200 of Fig. 3 is an ion trap mass spectrometer using a matrix-assisted laser desorption ionization (MALDI) technique and an ion source, and includes an ionizer 210, an ion trap section 220, a mass spectrometer 230 and an output section 240. The analysis device 200 may be a mass spectrometer using a technique different from the MALDI technique, or may be an analysis device other than a mass spectrometer.

The ionizer 210 includes a sample plate 211, a laser emitter 212, a laser driver 213 and an extraction electrode 214. The sample 1 to be measured is formed on the sample plate 211. The laser emitter 212 is driven by the laser driver 213 and emits pulsed laser light to the sample 1. Thus, various components included in the sample 1 are ionized. The extraction electrode 214 extracts the generated ions towards the ion trap section 220 by forming a predetermined electric field.

The ion trap section 220 includes an ion trap 221, an ion trap driver 222, a gas injector 223 and a gas driver 224. The ion trap 221 is constituted by a ring electrode 221a, a pair of end-cap electrodes 221b, 221c and a plurality of correction electrodes 221d. In Fig. 3, only one correction electrode 221d is shown. The ring electrode 221a, the pair of end-cap electrodes 221b, 221c and the plurality of correction electrodes 221d are driven by the ion trap driver 222.

The pair of end-cap electrodes 221b, 221c are opposite to each other with the ring electrode 221a sandwiched therebetween. The ring electrode 221a and the pair of end-cap electrodes 221b, 221c generate a quadrupole field for capturing ions. The plurality of correction electrodes 221d generate an electric field for correcting the quadrupole field generated by the ring electrode 221a and the end-cap electrodes 221b, 221c to an ideal quadrupole field. The ions extracted from the ionizer 210 are captured in the ion trap 221 through an opening provided in one end-cap electrode 221b.

The gas injector 223 is driven by the gas driver 224 and arranged to be able to inject gas to the captured ions. In the present embodiment, the gas injector 223 injects a helium gas to the ions, thereby cooling the ions. When collision dissociation of ions is performed, a plurality of ion traps may be provided in the ion trap section 220, and a gas injector that injects an argon gas or the like may further be provided.

The end-cap electrodes 221b, 221c add a predetermined electric field to the cooled ions. Thus, the ions are released from the ion trap 221 through an opening formed in the other end-cap electrode 221c and introduced into the mass spectrometer 230. The mass spectrometer 230 is a time-of-flight mass spectrometer. The ions that have been introduced into the mass spectrometer 230 fly in a flight space in the mass spectrometer 230 at a speed corresponding to a mass-to-charge ratio, and arrive at the output section 240 in an ascending order of the mass-to-charge ratio.

The output section 240 includes a detector 241 and an A/D (Analogue/Digital) converter 242. The detector 241 is a photomultiplier tube, for example. The detector 241 detects ions that have flown in the mass spectrometer 230 and outputs an analogue signal corresponding to a detection amount. The A/D converter 242 converts the analogue signal that is output by the detector 241 into a digital signal and supplies the converted digital signal to the analysis control system 100.

The above-mentioned laser driver 213, the ion trap driver 222, the gas driver 224 and the A/D converter 242 operate at predetermined time points in accordance with the operation sequence indicated by the analysis control file acquired by the analysis control system 100.

### (4) Operation Sequence Screen

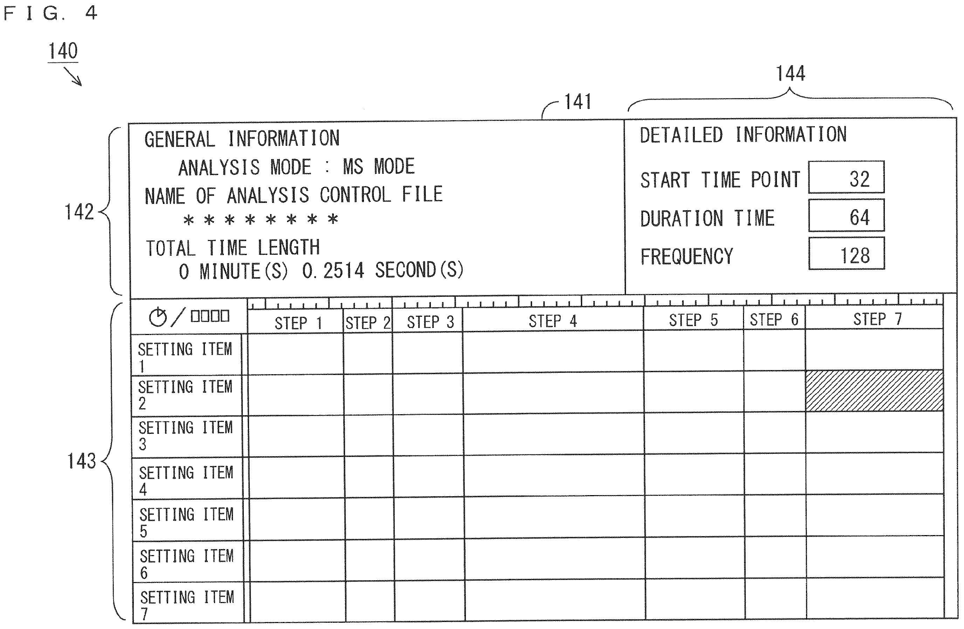

Fig. 4 is a diagram showing one example of the operation sequence screen displayed in the display unit 140. As shown in Fig. 4, the operation sequence screen 141 includes a general information display region 142, a timeline display region 143 and a detailed information setting region 144. In the general information display region 142, an analysis mode of the analysis control file acquired by the acquirer 11 of Fig. 2, the name of the analysis control file and a total time length of the operation sequence based on the analysis control file are displayed.

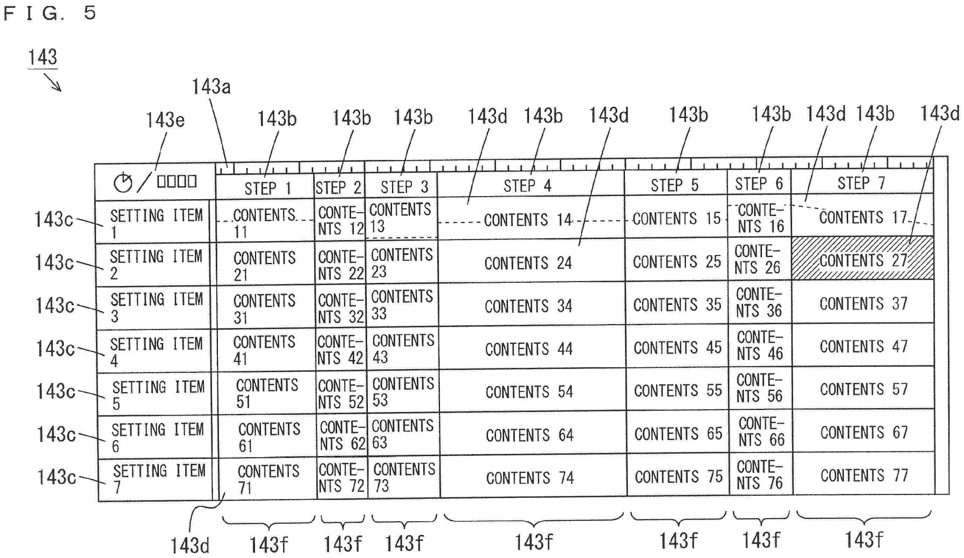

In the timeline display region 143, a time axis is defined to extend in a left-and-right direction, a plurality of steps are arranged in the left-and-right direction in a chronological order, and contents of one or a plurality of setting items of each step are displayed to be arranged in an up-and-down direction. Details of the timeline display region 143 will be described below. The user can select the contents of a desired setting item in the timeline display region 143 by operating the operation unit 130 of Fig. 2. In the example of Fig. 4, a hatching pattern indicates the contents of the selected setting item (the contents display area 143d in which the below-mentioned "contents 27" of Fig. 5 is displayed).

The detailed contents of the setting item selected in the timeline display region 143 are displayed in the detailed information setting region 144. The detailed contents of the setting item include a parameter value such as a start time point, a duration time or a frequency of the setting item of the selected step. Further, the user can give an instruction for setting or changing a parameter value on the detailed information setting region 144 by operating the operation unit 130. The accepter 15 of Fig. 2 accepts an instruction for setting or changing a parameter value and supplies the accepted parameter value to the generator 12 of Fig. 2. Thus, the operation sequence screen 141 is updated, and the operation sequence is edited.

The operation sequence screen 141 can be displayed in either a full screen mode or a scroll display mode. In the full screen display of the operation sequence screen 141, the scale of the operation sequence screen 141 is adjusted such that the entire operation sequence screen 141 can be displayed on the display surface of the display unit 140. On the other hand, in the scroll display of the operation sequence screen 141, the scale of the operation sequence screen 141 is constant. When the entire operation sequence screen 141 is not displayed on the display surface of the display unit 140, the user can change the portion of the operation sequence screen 141 that is displayed on the display surface of the display unit 140 as desired by operating a scroll bar (not shown).

Fig. 5 is a diagram showing the details of the timeline display region 143 of Fig. 4. As shown in Fig. 5, a time-axis scale 143a extending in the left-and-right direction, a plurality of step display areas 143b, a plurality of item display areas 143c, a plurality of contents display areas 143d and a time-axis switch button 143e are displayed in the timeline display region 143. The time-axis scale 143a is displayed during the first display mode and not displayed during the second display mode. The display mode will be described below.

The plurality of step display areas 143b are arranged along the time axis. In each step display area 143b, a step identification information piece for identifying a step is displayed. During the first display mode, the plurality of step display areas 143b are displayed to correspond to the time points on the time-axis scale 143a. In the example of Fig. 5, the "step 1" to the "step 7" are respectively displayed in the plurality of step display areas 143b as the step identification information pieces. The specific step identification information pieces are "preparation", "laser emission", "ion capture", "cooling" or the like. The timeline display region 143 of Fig. 5 is displayed in the scroll display, and the step display areas 143b of the steps that come later than the "step 7" are not displayed.

The plurality of item display areas 143c are arranged in the up-and-down direction. In each item display area 143c, a setting item identification information piece for identifying a setting item is displayed. In the example of Fig. 5, the "setting item 1" to the "setting item 7" are respectively displayed in the plurality of item display areas 143c as the setting item identification information pieces. Specific setting item identification information pieces are a "ring electrode", an "end-cap electrode", a "correction electrode", "laser", a "helium gas", an "argon gas", "A/D conversion" or the like.

The plurality of contents display areas 143d are arranged in the up-and-down direction for each step. In each contents display area 143d, the contents of a setting item are displayed. In the example of Fig. 5, the "contents 11" to the "contents 17" are respectively displayed in the plurality of contents display areas 143d that correspond to the "setting item 1" and are arranged in a chronological order as the contents of the setting items. The similar contents of the setting items such as the "contents 21" to the "contents 77" are also displayed in the plurality of contents display areas 143d corresponding to the "setting item 2" to the "setting item 7". The specific contents of the setting items are "normal", "scan", "trigger ON", "no processing" or the like.

Further, in the plurality of contents display areas 143d corresponding to the "setting item 1", the change of the frequency of an RF (radio frequency) voltage added to the "ring electrode" (the ring electrode 221a of Fig. 3) is further indicated by a dotted line. In this manner, the contents of the setting item may include an index indicating a parameter value. A step display area 143b and a plurality of contents display areas 143d corresponding to each step constitute a step display column 143f.

The user can give an instruction for switching the display mode to the display mode switcher 14 of Fig. 2 every time the user operates the time-axis switch button 143e using the operation unit 130. The display mode switcher 14 switches the display mode of the display controller 13 of Fig. 2 between the first display mode and the second display mode every time the display mode switcher 14 receives an instruction for switching the display mode. In the first display mode, each of the plurality of step display columns 143f is displayed to have a length corresponding to an actual time length required for each step in the time-axis direction as shown in the example of Fig. 5.

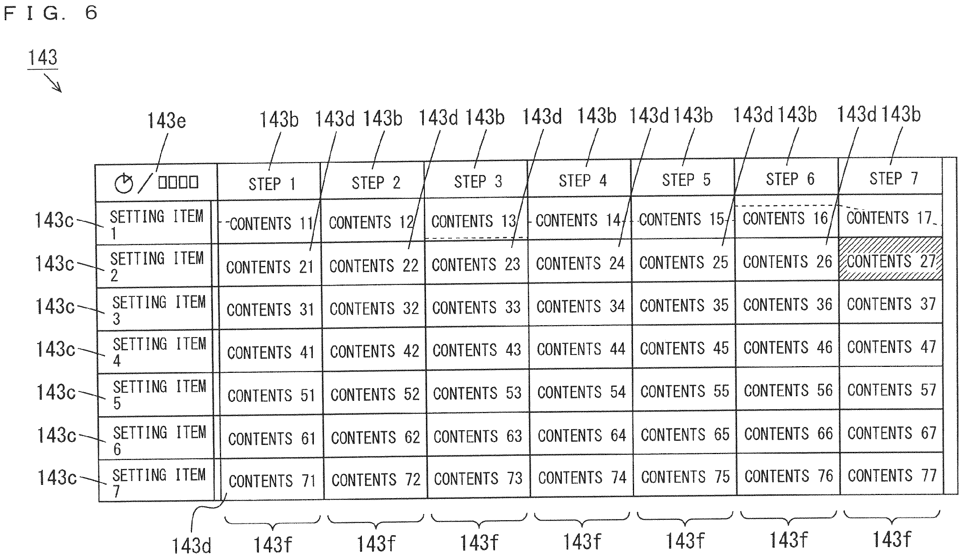

Fig. 6 is a diagram showing the details of the timeline display region 143 in the second display mode. As shown in Fig. 6, the plurality of step display columns 143f are displayed to have the similar lengths in the time-axis direction in the second display mode. In this case, the time-axis scale 143a is not shown. In the second display mode, the user can easily identify the chronological order of the plurality of steps.

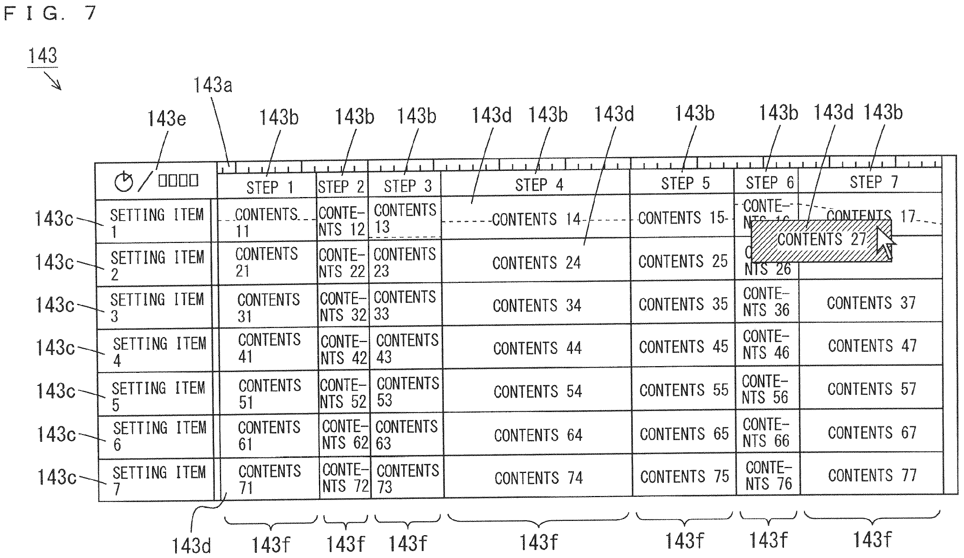

The user can give an instruction for editing the operation sequence in the timeline display region 143. Fig. 7 is a diagram showing one example of the editing of the operation sequence. In the example of Fig. 7, the user selects the contents display area 143d in which the "contents 27" is displayed and performs an operation of moving the "contents 27" to a contents display area 143d in another step using the operation unit 130. The contents mover 16 of Fig. 2 moves the contents of the selected contents display area 143d to another contents display area 143d based on the operation by the user.

In this case, the contents of the contents display areas 143d that have been present between the selected source contents display area 143d and the selected destination contents display area 143d move towards the step of the selected source contents display area 143d. The contents of the selected source contents display area 143d may be rewritten by the contents of the destination contents display area 143d, or may be copied to the destination contents display area 143d. The generator 12 of Fig. 2 updates the screen data based on the movement of the contents by the contents mover 16.

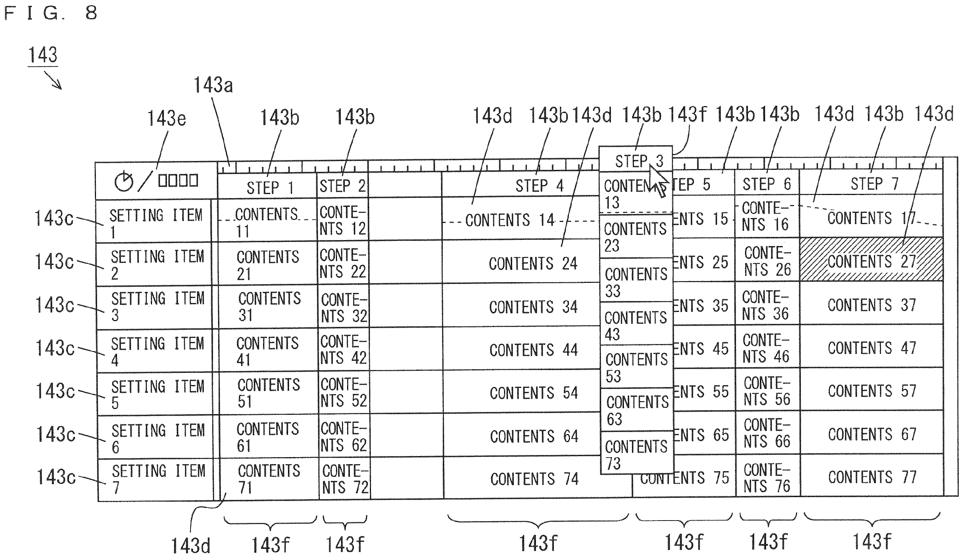

Fig. 8 is a diagram showing another example of the editing of the operation sequence. In the example of Fig. 8, the user selects the step display area 143b in which the "step 3" is displayed using the operation unit 130 and performs an operation of moving the "step 3" to a step display column 143f of another step. The column mover 17 of Fig. 2 moves the step identification information piece and the contents of the selected step display column 143f to another step display column 143f based on the operation by the user.

In this case, the step identification information pieces and the contents in the step display columns 143f that have been present between the selected source step display column 143f and the selected destination step display column 143f move towards the step of the selected source step display column 143f. The step identification information piece and the contents in the selected source step display column 143f may be rewritten by the step identification information piece and the contents in the destination step display column 143f, or may be copied to the destination step display column 143f. The generator 12 updates the screen data based on the movement of the contents by the column mover 17.

### (5) Editing Processing

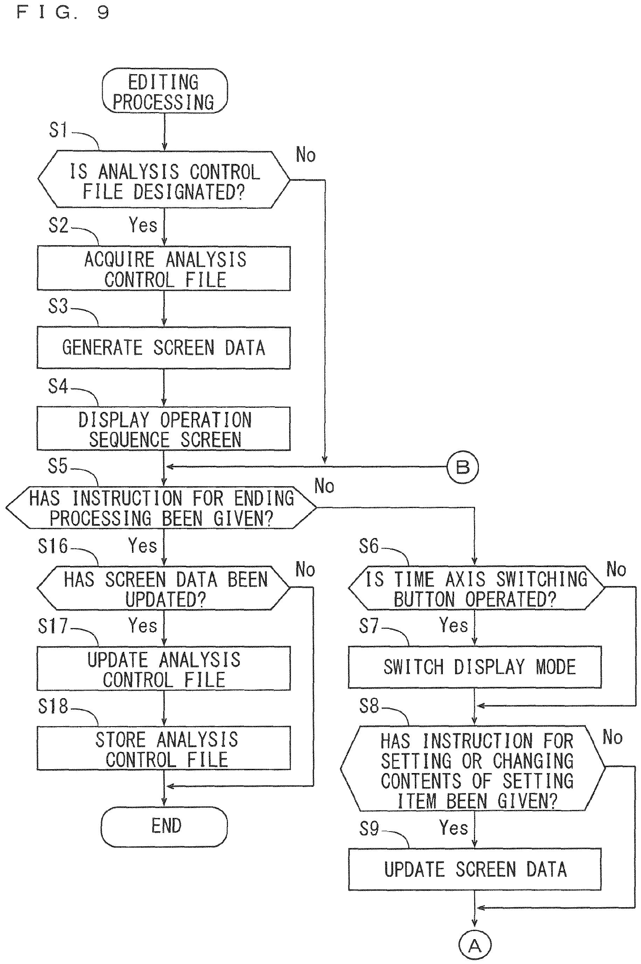

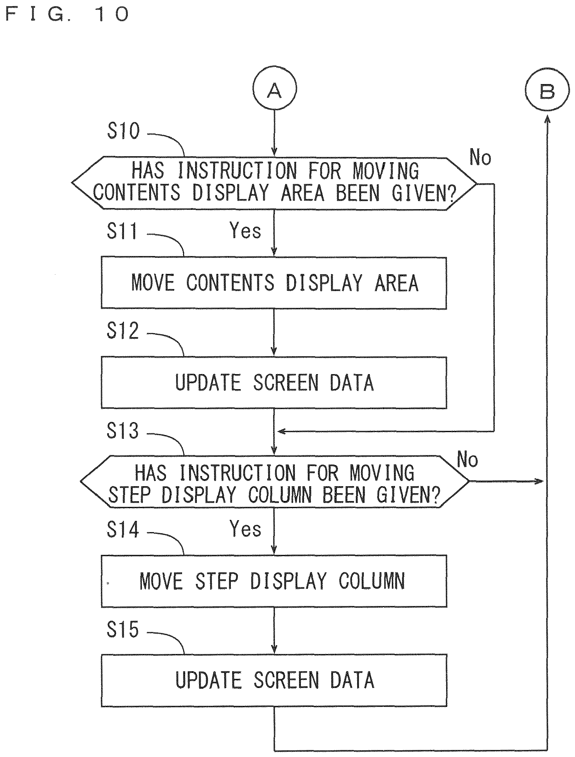

Figs. 9 and 10 are flow charts showing the algorithm of the editing processing executed by the operation sequence editing program. Further, the acquirer 11 first determines whether an analysis control file has been designated (step S1). The user can designate a desired analysis control file stored in the storage device 120 or the like by operating the operation unit 130. When an analysis control file is not designated, the acquirer 11 proceeds to the step S5. When an analysis control file is designated, the acquirer 11 acquires the designated analysis control file from the storage device 120 or the like (step S2).

The generator 12 generates the screen data based on the analysis control file acquired in the step S2 (step S3). The display controller 13 allows the display unit 140 to display the operation sequence screen based on the screen data generated in the step S3 (step S4) and proceeds to the step S5. In the subsequent processing, the operation sequence screen is continuously displayed in the display unit 140. Further, when the screen data is updated, the operation sequence screen is displayed in the display unit 140 based on the updated screen data.

In the step S5, the display controller 13 determines whether an instruction for ending the editing processing has been given (step S5). The user can give an instruction for ending the editing processing to the display controller 13 by operating the operation unit 130. When an instruction for ending the editing processing has not been given, the display mode switcher 14 determines whether the time-axis switch button 143e has been operated (step S6).

When the time-axis switch button 143e has not been operated, the display mode switcher 14 proceeds to the step S8. In the present embodiment, the first display mode is selected as the display mode of the display controller 13 in an initial state. When the time-axis switch button 143e is operated, the display mode switcher 14 switches the display mode of the display controller 13 between the first display mode and the second display mode (step S7) and proceeds to the step S8.

In the step S8, the accepter 15 determines whether an instruction for setting or changing the contents of a setting item has been given (step S8). For example, the user can set or change a parameter value corresponding to a desired contents display area 143d in the detailed information setting region 144 by operating the operation unit 130. Further, the user can set the contents such as a parameter value, whether processing is performed or a time point at which the processing is performed in a desired contents display area 143d or change the contents displayed in the contents display area 143d by operating the operation unit 130.

When an instruction for setting and changing the contents of the setting item has not been given, the accepter 15 proceeds to the step S11. When an instruction for setting or changing the contents of the setting item has been given, the generator 12 updates the screen data based on the contents accepted by the accepter 15 (step S9) and proceeds to the step S10.

In the step S10, the contents mover 16 determines whether an instruction for moving any contents display area 143d has been given (step S10). The user can give an instruction for moving the desired contents display area 143d in the timeline display region 143 by operating the operation unit 130. When an instruction for moving the contents display area 143d is not given, the contents mover 16 proceeds to the step S13. When an instruction for moving the contents display area 143d is given, the contents mover 16 moves the contents of the selected contents display area 143d to another contents display area 143d based on the instruction (step S11). Further, the generator 12 updates the screen data based on the contents display area 143d that has been moved by the contents mover 16 (step S12) and proceeds to the step S13.

In the step S13, the column mover 17 determines whether an instruction for moving any step display column 143f has been given (step S13). The user can give an instruction for moving a desired step display column 143f in the timeline display region 143 by operating the operation unit 130. When an instruction for moving a step display column 143f is not given, the column mover 17 returns to the step S5. When an instruction for moving a step display column 143f is given, the column mover 17 moves the selected step display column 143f to another step display column 143f based on the instruction (step S14). Further, the generator 12 updates the screen data based on the step display column 143f that has been moved by the column mover 17 (step S15) and returns to the step S5.

In the step S5, when an instruction for ending the editing processing is given, the display controller 13 determines whether the screen data has been updated (step S16). When the screen data has not been updated, the display controller 13 ends the editing processing. When the screen data is updated, the creator 18 updates the analysis control file acquired in the step S2 based on the screen data that is updated in the step S9, S12 or S15 (step S17). Further, the creator 18 allows the storage device 120 or the like to store the analysis control file that is updated in the step S17 (step S18) and ends the editing processing.

In the above-mentioned editing processing, part of the processing may be performed at another time point. For example, any of a set of the steps S6 and S7, a set of the steps S8 and S9, a set of the steps S10 to S12 and a set of the steps S13 to S15 may be performed first.

### (6) Effects

In the operation sequence editing device 10 according to the present embodiment, the operation sequence screen 141 is displayed in the display unit 140. In the operation sequence screen 141, the plurality of step display areas 143b in which the plurality of step identification information pieces for identifying the plurality of steps of the analysis device 200 are arranged in the time-axis direction in a chronological order and arranged along the time-axis. The plurality of item display areas 143c displaying the plurality of item identification information pieces for identifying the plurality of setting items of each step are arranged in the direction that intersects with the time-axis direction. The plurality of contents display areas 143d in which the contents of the plurality of setting items are displayed are arranged in the direction that intersects with the time-axis direction for each step. A step display column 143f is constituted by a step display area 143b corresponding to each step and a plurality of contents display areas 143d.

In this configuration, the user can easily identify the chronological order of the plurality of steps and the contents of the setting item of each step by viewing the operation sequence screen 141. Thus, the detailed setting contents of the entire operation sequence of the analysis device 200 can be easily identified. Further, the user can easily identify each step and each setting item and can easily identify the contents of each setting item, and the correspondence relationship between the step and the setting item. Further, the user can easily identify the contents of the setting item of each step by viewing the step display column 143f.

While preferred embodiments of the present invention have been described above, it is to be understood that variations and modifications will be apparent to those skilled in the art without departing the scope and spirit of the present invention. The scope of the present invention, therefore, is to be determined solely by the following claims.

## Claims

1. An operation sequence editing device for editing an operation sequence of an analysis device with use of a display unit, comprising:
an acquirer that acquires contents of one or a plurality of setting items included in each of a plurality of steps of the operation sequence;
a generator that generates screen data for displaying the acquired contents of the one or plurality of setting items of the plurality of steps as an operation sequence screen; and
a display controller that displays the operation sequence screen in the display unit based on the generated screen data, wherein
the operation sequence screen includes a time axis extending in a first direction, and is arranged such that the plurality of steps are arranged in the first direction in a chronological order, and is arranged such that contents of one or a plurality of setting items of each step are arranged in a second direction that intersects with the first direction.

2. The operation sequence editing device according to claim 1, wherein
the operation sequence screen includes a plurality of step display areas in which a plurality of step identification information pieces for identifying the plurality of steps are displayed, a plurality of item display areas in which a plurality of item identification information pieces for identifying a plurality of setting items are displayed, and a plurality of contents display areas in which contents of the plurality of setting items are displayed, and
the plurality of step display areas are arranged along the time axis, the plurality of item display areas are arranged in the second direction, the plurality of contents display areas are arranged in the second direction for each step, and the step display area and one or a plurality of contents display areas corresponding to each step constitute a step display column.

3. The operation sequence editing device according to claim 2, further comprising a display mode switcher that selectively switches the display controller between a first display mode and a second display mode, wherein
the display controller allows the operation sequence screen to be displayed in the first display mode such that each of a plurality of step display rows has a length corresponding to an actual time length required for each step in the first direction, and allows the operation sequence screen to be displayed in the second display mode such that the plurality of step display rows have similar lengths in the first direction.

4. The operation sequence editing device according to claim 2 or 3, further comprising a contents mover that moves contents of a contents display area that is selected in the operation sequence screen to another contents display area based on an operation by a user, wherein
the generator updates the screen data based on the movement of the contents by the contents mover.

5. The operation sequence editing device according to any one of claims 2 to 4, further comprising a column mover that moves a step display column selected in the operation sequence screen in a direction of the time axis based on an operation by a user, wherein
the generator updates the screen data based on the movement of the step display column by the column mover.

6. The operation sequence editing device according to any one of claims 1 to 5, wherein
the display controller allows the display unit to display a detailed information setting region for setting one or a plurality of contents in a contents display area selected in the operation sequence screen, and
the operation sequence editing device further includes an accepter that accepts the setting of the one or plurality of contents in the detailed information setting region, and
the generator updates the screen data based on the one or plurality of contents accepted by the accepter.

7. The operation sequence editing device according to any one of claims 1 to 6, further comprising a creator that creates an analysis control file for controlling the analysis device based on the screen data.

8. An analysis control system that controls an operation of an analysis device, comprising:
the operation sequence editing device according to claim 7;
a display unit that displays an operation sequence screen based on control by the display controller of the operation sequence editing device, and
an analysis control device that controls an operation of the analysis device based on an analysis control file created by the creator of the operation sequence editing device.

9. An analysis system comprising:
the analysis control system according to claim 8; and
an analysis device that acquires analysis data indicating a result of analysis by analyzing a sample based on control by the analysis control device of the analysis control system.

10. An operation sequence editing method for editing an operation sequence of an analysis device with use of a display unit, including:
acquiring contents of one or a plurality of setting items included in each of a plurality of steps of the operation sequence;
generating screen data for displaying the acquired contents of the one or plurality of setting items of the plurality of steps as an operation sequence screen; and
displaying the operation sequence screen in the display unit based on the generated screen data, wherein
the operation sequence screen includes a time axis extending in a first direction, is arranged such that the plurality of steps are arranged in the first direction in a chronological order, and is arranged such that contents of one or a plurality of setting items of each step are arranged in a second direction that intersects with the first direction.
